# EUROPEAN PATENT SPECIFICATION

(11) **EP 0 694 724 B1**
(45) Date of publication and mention of the grant of the patent: **14.04.1999**
(21) Application number: 95201935.4
(22) Date of filing: 13.07.1995
(51) Int. Cl.: F16L 19/08

(54) **A coupling for the rapid connection of tubes of plastics material**
Schnellkupplung für Kunststoffrohre
Raccord rapide pour tuyaux en matière plastique

(30) Priority: 26.07.1994 IT MI941596
(43) Date of publication of application: 31.01.1996
(73) Proprietor: F.I.P. FORMATURA INIEZIONE POLIMERI S.p.A., 16015 Casella - Genova (IT)
(72) Inventor: Catanzano, Andrea, c/o F.I.P. Formatura Iniezione, I-16148 Genova (IT); Tropea, Gianluca, c/o F.I.P. Formatura Iniezione, I-16015 Casella - Genova (IT)
(74) Representative: De Nova, Roberto

(56) References cited:
- EP-A- 0 562 999
- WO-A-95/03508
- GB-A- 2 043 814
- GB-A- 2 054 078

## Description

The present invention relates to a coupling for the rapid connection of tubes of plastics material, according to the preamble of Claim 1 (see GB-A-2 043 814).

Known couplings of the type specified are called rapid couplings since they should enable plastics tubes to be connected together quickly.

In practice such couplings, although widely used and advantageous from various points of view, leave something to be desired with regard to the rapidity with which the tubes may be connected.

Indeed patience, force and dexterity are often needed for the insertion of the tube into the coupling, particularly when the coupling has been in store for a long time with the nut screwed onto the body, possibly with this being tightened excessively.

The problem at the basis of the present invention is to devise a coupling of the type specified which has structural and functional characteristics such as to overcome this problem.

This problem is resolved by a coupling of the type specified includes a ridge releasably engageable, in a recess formed in the clamping ring so as to act radially, according to claim 1.

The characteristics and advantages of the coupling according to the present invention will become apparent from the description of a preferred embodiment thereof which follows, given purely by way of non-limiting example, with reference to the appended drawings, in which:
Figures 1, 2, 3 and 4 are partially sectioned views of a coupling according to the invention in different stages of its operation,
Figures 1A, 2A, 3A and 4A are sectional views of a detail of the coupling of the preceding Figures, on an enlarged scale.

With reference to the appended drawings, a coupling for the connection of one tube 2 to another tube not shown is generally indicated 1. The tube 2 is of plastics material, for example polyethylene, and has a predetermined radius A.

The coupling 1 includes a body 3, a seal 4, a seal-tightening bush 5, a clamping ring 6 and a nut 7.

The body 3 has external threading 8 for screwing into a connector of the other tube, which connector is not shown in the drawings, a plurality of tongues, 9 for an operating key or for manual operation and coarse threading 10.

The body 3 includes an internal axial shoulder 11 for abutment by the tube 2, a seat 12 for the seal 4 and a cylindrical guide portion 13 for the bush 5. The cylindrical guide portion has an annular projection 13a. The body 3 terminates at a free edge 14.

The body 3 is preferably made by injection moulding from a suitable plastics material, for example a polyolefin.

The bush 5 includes a cylindrical guide portion 15 which has an annular projection 15a and which engages the cylindrical portion 13 substantially irreversibly by the snap engagement of the projection 15a over the projection 13a. Thus the bush is effectively fixed into the body.

The bush 5 includes an outer flange 16 which defines a shoulder 17 facing the free edge 14 and a counter-shoulder 18, at its opposite end.

The cylindrical portion 15 has an end 19 facing the seal 4 and an opposite end 20 from which projects an annular ridge 21.

The bush 5 is movable axially between a first position in which there is a predetermined spacing N between the shoulder 17 and the free edge 14 and a second position in which the shoulder 17 bears against the free edge 14.

When the bush is in its first position, the end 19 does not press against the seal 4 which is thus free to move axially and projects slightly into the body 3. Specifically, in this condition, the seal has an inner radius B such as to interfere with the tube by a limited amount indicated C.

When the bush is in its second position, the seal is subject to a predetermined axial compression and is clamped against the tube.

The annular ridge 21 has a section in the form of an inverted right-angled trapezium, with its oblique side only slightly inclined so as to form a projection 22 extending radially outwardly and having a predetermined, limited radial dimension.

The bush 5 is preferably made by injection moulding from a suitable plastics material such as a polyolefin.

The clamping ring 6 has one end 23 facing the end 20 of the bush and is positioned so as substantially to form an extension of the bush itself. The clamping ring 6 has internal corrugations with sharp edges, each indicated 24, and has an external conical surface 25.

A flange 26 is formed at the end 23 and defines an oppositely facing counter-shoulder 27.

The ring 6 has a recess 28 in its end 26, which recess has a section matching that of the ridge 21, in the form of an inverted right-angled trapezium with its oblique side slightly inclined and defining a re-entrant cavity 29 which matches the projection 22.

The ridge 21 is releasably engaged in the recess 28, from within, so as to act radially outwardly thereon, to keep the ring enlarged while the projection 22 is releasably engaged in the re-entrant cavity 29 substantially like a hook so as to retain the ring in axial engagement with the bush.

It should be noted that, in its enlarged condition, the clamping ring has an inner radius D slightly less than the outer radius A of the tube so that it interferes with the tube itself by a limited amount indicated E.

The clamping ring is preferably made by injection moulding from a suitable plastics material such as an acetal resin.

The nut 7 has external tongues 30 for an operating key or for manual operation and coarse internal threading 31 which matches the threading 10, a shoulder 32 facing the counter-shoulder 18 and a shoulder 33 facing the counter-shoulder 27, as well as an internal conical surface 34 which mates with the outer conical surface 25 of the clamping ring 6.

The nut is preferably made by injection moulding from the same plastics material as that of the body.

The coupling is completed by a reference line 35 formed circumferentially on the outer visible surface of the body 3 substantially at the same level as the axial shoulder 11.

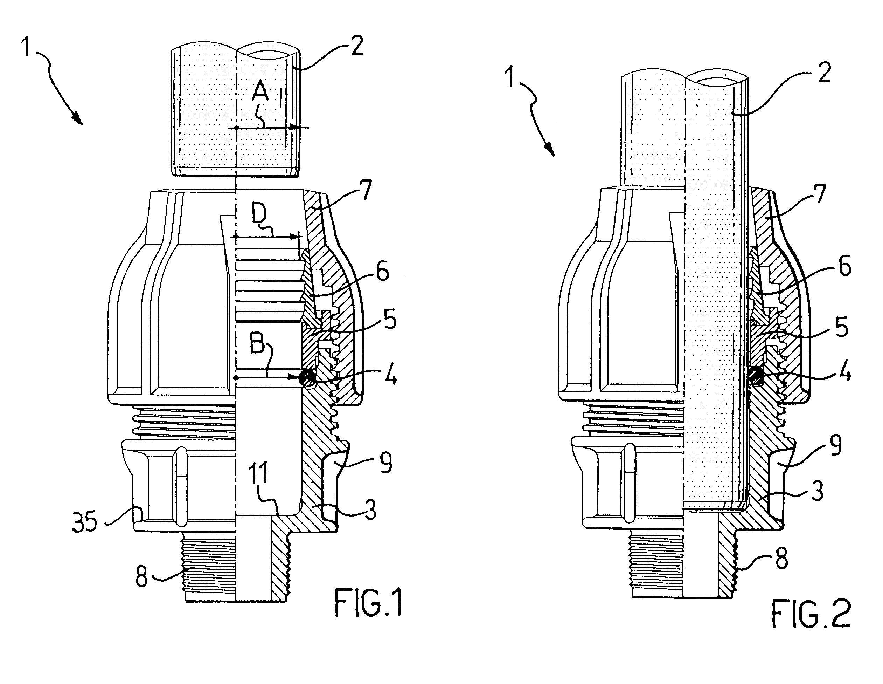

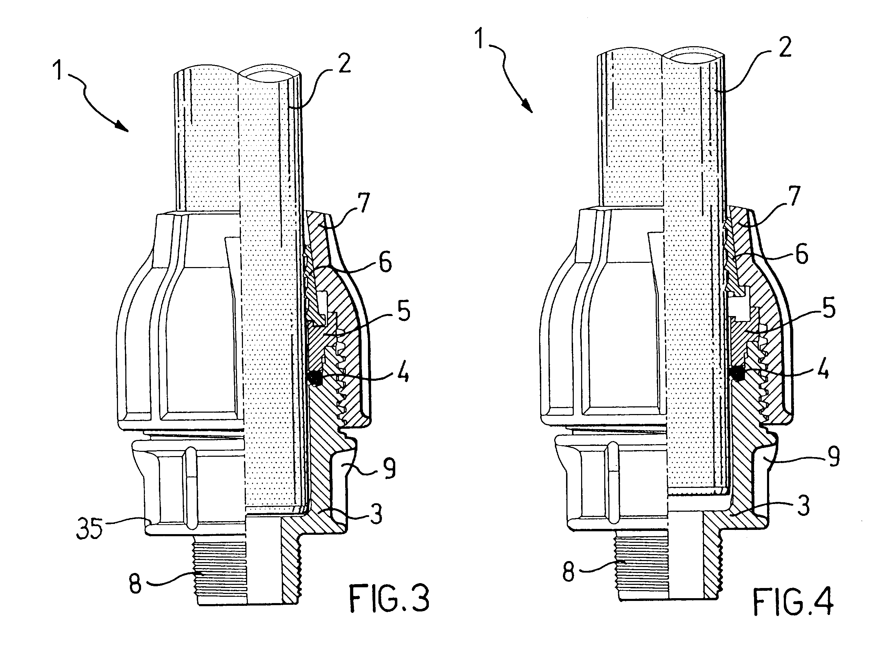

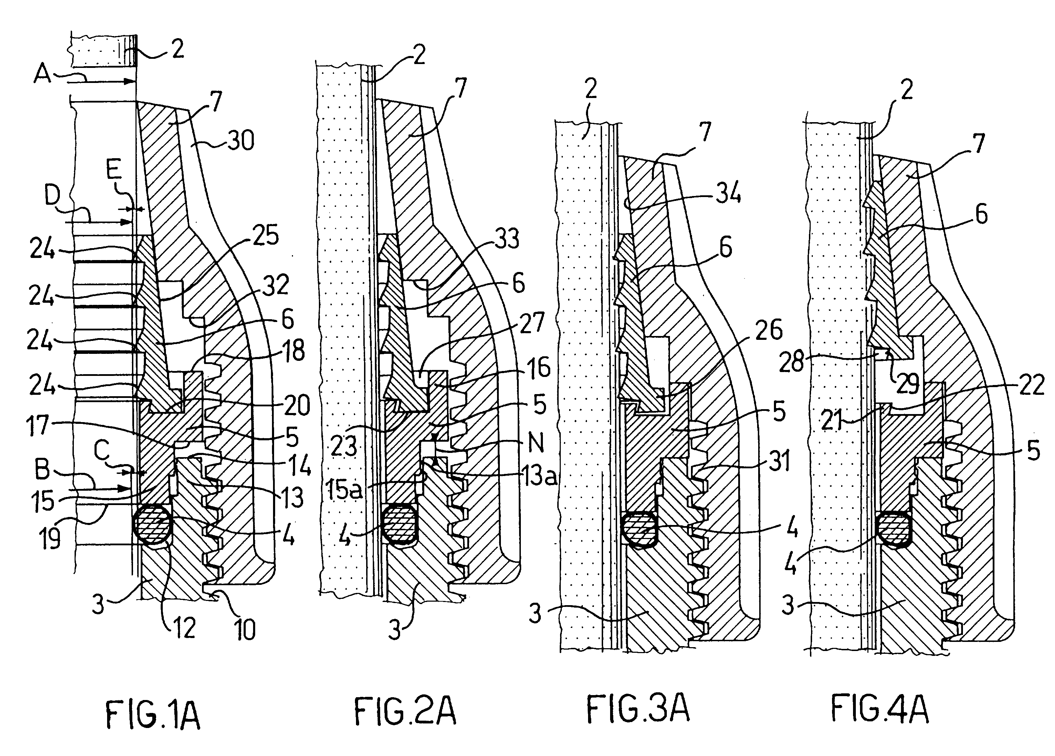

In operation, when the coupling is ready to be put into use, all its parts are assembled to form a unit which can be manipulated as a single entity, as shown in Figure 1.

In this initial condition, the clamping ring is held in its enlarged form by the ridge provided for this purpose on the bush. The bush is, in turn, in its first position, with its end remote from the seal and not pressing thereon.

The tube can easily be introduced into the coupling, passing beyond the clamping ring and the seal without forcing until it engages the axial shoulder in the body.

It should be noted that, when the tube is inserted in the coupling, the clamping ring is further enlarged and the projection 22, by virtue of its limited radial dimension, disengages from the re-entrant cavity.

At this point, the nut is screwed on fully until the flange of the bush is tightly clamped between the free edge 14 of the body and the shoulder 32 of the nut itself, compressing the seal against the tube and tightening the clamping ring around the tube.

The connection is thus effected. During use, should the tube be subjected to an axial tractive force away from the other tube, it is easy to see that the tube can move only a short distance out of the coupling, drawing the clamping ring with it until the counter-shoulder 27 engages the shoulder 33 of the flange.

During this movement, the clamping ring is further tightened around the tube by virtue of the increased mutual engagement between the two mating conical surfaces.

The main advantage of the coupling of the present invention lies in the unaccustomed rapidity with which the connection can be made.

It should also be noted that, on insertion of the tube in the coupling, the user knows with certainty when the end of the tube engages the axial shoulder since he feels its abutment with it. Thus the unfavourable possibility of the tube not being fully inserted in the coupling is avoided.

The correctness of the connection is further ensured by the fact that, before inserting the tube in the coupling, the user is able to see the exact length of tube which should fit into the coupling by viewing the reference line on the outside of the body.

A further advantage of the coupling according to the present invention lies in the fact that, should the nut become unscrewed, the clamping ring, the bush and the seal cannot be lost.

A further advantage of the coupling according to the present invention lies in the fact that it can easily be made by injection moulding, which is not of little advantage for an article which is intended to be mass produced.

Obviously an expert in the art may make numerous modifications and variations to the coupling described above in order to satisfy various specific requirements, all of which fall within the scope of protection of the invention as defined by the following claims.

## Claims

1. A coupling (1) for the rapid connection of tubes of plastics material, of the type comprising a body (3) formed with an internal axial abutment (11) for a tube (2), a seal (4), a seal-compressing bush (5), a clamping ring (6) and a nut (7) for screwing onto the body (3) which acts on the seal-compressing bush (5) and on the clamping ring (6), the bush (5) including a ridge (21) engageable in a recess (28) formed in the clamping ring (6) so as to act radially outwardly thereon, characterised in that the ridge (21) is releasably engageable in the recess (28).

2. A coupling (1) according to Claim 1, characterised in that the bush (5) includes a projection (22) releasably engageable, substantially like a hook, in a re-entrant cavity (29) formed in the ring (6).

3. A coupling (1) according to Claim 2, characterised in that the projection (22) has a limited predetermined radial dimension.

4. A coupling (1) according to Claim 3, characterised in that the projection (22) and the re-entrant cavity (29) are defined by the ridge (21) and the recess (28) respectively.

5. A coupling (1) according to Claim 4, characterised in that the seal-compressing bush (5) is movable between a position in which the seal (4) is free to move axially and a position of abutment with the body (3) in which the seal (4) is subject to a predetermined axial compressive force.

6. A coupling (1) according to Claim 5, characterised in that the bush (5) is substantially irreversibly engaged with the body (3).

7. A coupling (1) according to Claim 6, characterised in that it includes a projection (13a) on the body (3) and a projection (15a) on the bush (5) snap engaged over the projection (13a) on the body (3).

8. A coupling (1) according to Claim 7, characterised in that it includes a reference line (35) formed on the outer visible surface of the body (3) at substantially the same level as the axial abutment (11).

## Patentansprüche

1. Kupplung (1) zur schnellen Verbindung von Rohren aus Plastikmaterial, des Typs aufweisend einen mit einem internen Anschlag (11) für ein Rohr (2) ausgebildeten Körper (3), eine Dichtung (4), eine dichtungskomprimierende Buchse (5), einen Klammerring (6) und eine Mutter (7) zum Schrauben auf den Körper (3), welche auf die dichtungskomprimierende Buchse (5) und auf den Klammerring (6) wirkt, wobei die Buchse (5) einen Steg (21) aufweist, der in eine in dem Klammerring (6) ausgebildete Ausnehmung (28) eingreifbar ist, um so radial nach außen darauf zu wirken,
**dadurch gekennzeichnet,**
daß der Steg (21) lösbar in die Ausnehmung (28) eingreifbar ist.

2. Kupplung (1) gemäß Anspruch 1,
**dadurch gekennzeichnet,**
daß die Buchse (5) einen Vorsprung (22) aufweist, der lösbar, im wesentlichen wie ein Haken in einem in dem Ring (6) ausgebildeten einspringenden Hohlraum (29) eingreifbar ist.

3. Kupplung (1) gemäß Anspruch 2,
**dadurch gekennzeichnet,**
daß der Vorsprung (22) eine begrenzte radiale Ausdehnung hat.

4. Kupplung (1) gemäß Anspruch 3,
**dadurch gekennzeichnet,**
daß der Vorsprung (22) und der einspringende Hohlraum (29) durch den Steg (21) bzw. die Ausnehmung (28) definiert sind.

5. Kupplung (1) gemäß Anspruch 4,
**dadurch gekennzeichnet,**
daß die dichtungskomprimierende Buchse (5) zwischen einer Position, in der die Dichtung (4) axial frei bewegbar ist, und einer Position der Abstützung mit dem Körper (3) bewegbar ist, in der die Dichtung (4) einer festgelegten axialen Kompressionskraft unterworfen ist.

6. Kupplung (1) gemäß Anspruch 5,
**dadurch gekennzeichnet,**
daß die Buchse (5) im wesentlichen irreversibel mit dem Körper (3) im Eingriff ist.

7. Kupplung (1) gemäß Anspruch 6,
**dadurch gekennzeichnet,**
daß sie einen Vorsprung (13a) an dem Körper (3) und einen Vorsprung (15a) an der Buchse (5) aufweist, der über den Vorsprung (13a) des Körpers (3) einschnappt.

8. Kupplung (1) gemäß Anspruch 7,
**dadurch gekennzeichnet,**
daß sie eine an der äußeren sichtbaren Oberfläche des Körpers (3) gebildete Referenzlinie (35) auf im wesentlichen gleicher Höhe wie der axiale Anschlag (11) aufweist.

## Revendications

1. Raccord (1) destiné au raccordement rapide de tuyaux de matière plastique, du type comprenant un corps (3) formé avec une butée axiale interne (11) destinée à un tuyau (2), un joint (4), une douille de compression de joint (5), une bague de serrage (6) et un écrou (7) destiné à être vissé sur le corps (3) qui agit sur la douille de compression de joint (5) et sur la bague de serrage (6), la douille (5) comprenant une nervure (21) pouvant être enclenchée dans un évidement (28) formé dans la bague de serrage (6) de manière à agir radialement vers l'extérieur sur celle-ci, caractérisé en ce que la nervure (21) peut être enclenchée de façon amovible dans l'évidement (28).

2. Raccord (1) selon la revendication 1, caractérisé en ce que la douille (5) comprend une saillie (22) pouvant être enclenchée de façon amovible, pratiquement comme un crochet, dans une cavité rentrante (29) formée dans la bague (6).

3. Raccord (1) selon la revendication 2, caractérisé en ce que la saillie (22) présente une dimension radiale prédéterminée limitée.

4. Raccord (1) selon la revendication 3, caractérisé en ce que la saillie (22) et la cavité rentrante (29) sont définies par la nervure (21) et l'évidement (28) respectivement.

5. Raccord (1) selon la revendication 4, caractérisé en ce que la douille de compression de joint (5) peut être déplacée entre une position dans laquelle le joint (4) est libre de se déplacer axialement, et une position de venue en butée avec le corps (3) dans laquelle le joint (4) est soumis à une force de compression axiale prédéterminée.

6. Raccord (1) selon la revendication 5, caractérisé en ce que la douille (5) est enclenchée de façon pratiquement irréversible avec le corps (3).

7. Raccord (1) selon la revendication 6, caractérisé en ce qu'il comprend une saillie (13a) sur le corps (3) ainsi qu'une saillie (15a) sur la douille (5) emboîtée par enclenchement sur la saillie (13a) du corps (3).

8. Raccord (1) selon la revendication 7, caractérisé en ce qu'il comprend une ligne de référence (35) formée sur la surface extérieure visible du corps (3) pratiquement au même niveau que la butée axiale (11).
